# EUROPEAN PATENT APPLICATION

(11) **EP 0 730 279 A1**
(43) Date of publication of application: **04.09.1996**
(21) Application number: 95306375.7
(22) Date of filing: 12.09.1995
(51) Int. Cl.: G21F 9/02

(54) **Method and apparatus for non-catalytic oxidation of tritium, and system for removing tritium**

(30) Priority: 28.02.1995 JP 63615/95
(71) Applicant: Watanabe, Kuniaki, Toyama-shi, Toyama-ken (JP); Matsuyama, Masao, Toyama-ken (JP); Hasegawa, Kiyoshi, Toyama-shi, Toyama-ken (JP); KABUSHIKI KAISHA ISHIMORI SEISAKUSHO, Tokyo (JP)
(72) Inventor: Watanabe, Kuniaki, Toyama-shi, Toyama-ken (JP); Matsuyama, Masao, Toyama-ken (JP); Hasegawa, Kiyoshi, Toyama-shi, Toyama-ken (JP)
(74) Representative: Crisp, David Norman

(57) **Abstract**

A method of non-catalytic oxidation of tritium, capable of oxidation at room temperature without using a catalyst, and free from deterioration of oxidizing performance, is disclosed. The method comprises adding an ozone gas to a gaseous atmosphere containing tritium, and irradiating the gas mixture with ultraviolet rays.

## Description

### FIELD OF THE INVENTION

The present invention relates to a method of non-catalytic oxidation of tritium, an apparatus for non-catalytic oxidation of tritium, and a system for removing tritium, all being usable as basic technologies for recovering tritium for nuclear fusion reactors and nuclear facilities.

### DESCRIPTION OF THE PRIOR ART

One of the promising candidates for future high-density energy sources is a nuclear fusion reactor. First generation nuclear fusion reactors use a mixture of deuterium and tritium gases as a fuel. However, tritium is radioactive, and easily dissipates at ordinary temperatures or pressures. Full safety must be ensured in handling it. Thus, establishment of techniques capable of handling tritium with safety is essential for the early achievement of nuclear fusion reactors. From this point of view, many researchers are conducting studies related to safe handling techniques for tritium.

Facilities where studies for development of nuclear fusion reactors can be performed are equipped with "a tritium removal system," a system for recovering tritium from the ambient atmosphere of relevant buildings, rooms and tritium handling systems. The purpose is to protect researchers and operators from radiations and ensure the public safety. The bigger the research facilities and the greater the amount of tritium consumption, the larger the size of such an apparatus becomes. It necessitates a reliable and durable tritium removing apparatus to be installed.

The fundamental principle for the existing removal and recovery system of tritium is to oxidize gaseous tritium (HT and T₂) to convert it into tritium water (HTO and T₂O), and adsorb it onto a desiccant.

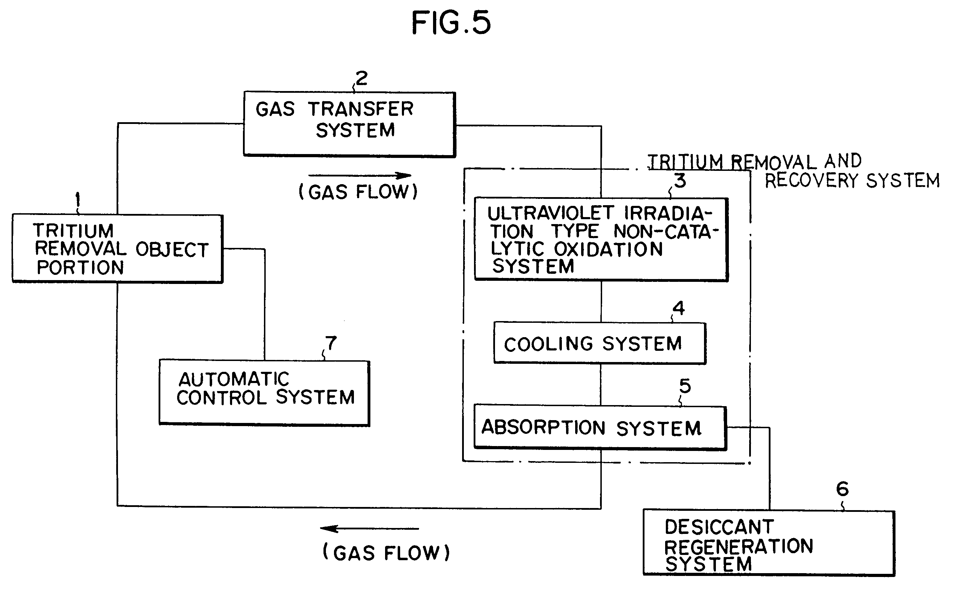

This tritium removal and recovery system, as shown in Fig. 5, sucks a gas from an object to be detritiated (portion 1) equipped with a gas inlet, conveys it to a tritium oxidation system 3 via a gas transfer system 2, where tritium is oxidized to facilitate its adsorption. A cooling system 4 lowers the gas temperature increased by heating during oxidation, and a tritium water absorption system 5 adsorbs the cooled tritium water onto a desiccant. The desiccant used for the adsorption of tritium water is regenerated by a desiccant regeneration system 6. The environmental conditions for these systems and the tritium removal object portion 1 are managed by an automatic control system 7.

Such a tritium removal/recovery procedure is started with the oxidation at the tritium oxidation system 3, where "the high temperature catalytic oxidation method" using a noble metal catalyst is adopted for the oxidation of tritium and its compounds.

The oxidation of tritium by the conventional high temperature catalytic oxidation method has posed the following problems:
(1) It takes time to heat the catalyst to a predetermined temperature.
(2) The performance of the catalyst may deteriorate.
(3) The catalyst deteriorated ends up in a radioactive waste.
(4) The system is complicated and large in size.
(5) The system is cumbersome to maintain and manage.

Thus, there has been a high demand for a novel method of oxidizing tritium, which is easy to start, which oxidises tritium in short periods of time, which causes no deterioration, and which can remain highly reliable and durable, even when the research facilities are scaled up, the consumption of tritium increases, and the equipment becomes large.

It is an object of the present invention to overcome the problems of the prior art.

### SUMMARY OF THE INVENTION

In accordance with the present invention there is provided a method of non-catalytic oxidation of tritium, an apparatus for non-catalytic oxidation of tritium, an apparatus for non-catalytic oxidation of tritium, and a system for removing tritium, which can all perform oxidation without using any catalysts, and whose oxidation performance does not deteriorate.

According to a first aspect of the present invention there is provided a method of non-catalytic oxidation of tritium, which comprises adding an ozone gas to a gaseous atmosphere containing tritium, and irradiating the gas mixture with ultraviolet rays.

According to a second aspect of the present invention there is provided a method of non-catalytic oxidation of tritium which comprises adding an oxygen gas to a gaseous atmosphere containing tritium, and irradiating the gas mixture with ultraviolet rays.

According to a third aspect of the present invention there is provided a method of non-catalytic oxidation of tritium which comprises adding an oxygen gas containing a predetermined amount of an ozone gas to a hydrogen gas containing tritium, and irradiating the gas mixture with ultraviolet rays.

According to a fourth aspect of the present invention there is provided an apparatus for non-catalytic oxidation of tritium which comprises an ultraviolet irradiator for emitting ultraviolet rays, a reactor for accommodating an ozone gas-incorporated gaseous atmosphere containing tritium, the reactor having a window for passing ultraviolet rays emitted from the ultraviolet irradiator, an ozone gas introduction line for introducing an ozone gas into the reactor, and an ozone gas introduction shut-off valve.

According to a fifth aspect of the present invention there is provided a system for removing tritium which includes an ultraviolet irradiation type non-catalytic oxidation system for irradiating an ozone gas-incorporated gaseous atmosphere containing tritium with ultraviolet rays.

The novel method developed as "the non-catalytic oxidation method" capable of oxidizing tritium without use of a catalyst and at room temperature involves a very simple basic procedure, which is outlined as follows:
(1) To add an ozone gas to a gaseous atmosphere containing tritium; and
(2) to irradiate the gas mixture with ultraviolet rays.

Whether or not such an oxygen-ozone-tritium reaction system generates tritium water by ultraviolet irradiation was investigated by computer simulations based on 34 elementary reactions reported. The following main reaction paths for the generation of tritium water were found:
(1) Upon irradiation with ultraviolet rays, ozone is decomposed into oxygen molecules and active oxygen atoms.
(2) The active oxygen atoms react with tritium molecules, forming hydroxyl radicals.
(3) The hydroxyl radicals react with tritium molecules again, forming tritium water.

The oxidation system of conventional devices is replaced by the above-described system, which employs the ultraviolet irradiation type non-catalytic oxidation method, to construct a tritium removal system. Since the so constructed system involves no deteriorable materials, it can be simplified in structure, scaled down, and kept highly reliable and durable.

According to such construction, when a gas mixture containing ozone as well as tritium is exposed to ultraviolet rays by the non-catalytic oxidation method for tritium according to the first aspect of the present invention, the ozone gas incorporated is decomposed into oxygen molecules and active oxygen atoms. The active oxygen atoms react with tritium molecules, generating hydroxyl radicals. The hydroxyl radicals react with tritium molecules again, forming tritium water. The resulting tritium water is adsorbed onto a desiccant, thus making it possible to remove tritium from the gaseous atmosphere.

When a tritium-containing gaseous atmosphere incorporating an ozone gas-containing oxygen gas is exposed to ultraviolet rays by the non-catalytic oxidation method for tritium according to the second aspect of the present invention the ozone gas incorporated is decomposed into oxygen molecules and active oxygen atoms. The active oxygen atoms react with tritium molecules, generating hydroxyl radicals. The hydroxyl radicals react with tritium molecules again, forming tritium water. The resulting tritium water is adsorbed onto a desiccant, thus making it possible to remove tritium from the gaseous atmosphere.

When a tritium-containing hydrogen gas incorporating an oxygen gas containing a predetermined amount of an ozone gas is exposed to ultraviolet rays by the non-catalytic oxidation method for tritium according to the third aspect of the present invention, the ozone gas incorporated is decomposed into oxygen molecules and active oxygen atoms. The active oxygen atoms react with tritium molecules, generating hydroxyl radicals. The hydroxyl radicals react with tritium molecules again, forming tritium water. Since the resulting tritium water is adsorbed onto a desiccant, tritium can be removed from the hydrogen gas, the gaseous atmosphere.

By applying the apparatus for non-catalytic oxidation of tritium according to the present invention, the ozone gas introduction shut-off valve provided in the ozone gas introduction line is opened to introduce an ozone gas into the reactor accommodating a gaseous atmosphere containing tritium. Then, ultraviolet rays are emitted by the ultraviolet irradiator to irradiate the ozone gas-incorporated gaseous atmosphere containing tritium with ultraviolet rays via the ultraviolet rays passing window provided in the reactor, whereby tritium water is generated in the reactor.

When the system for removing tritium according to the present invention is applied, a tritium-containing gaseous atmosphere sucked from the tritium removal object portion is conveyed to the ultraviolet irradiation type non-catalytic oxidation system, where an ozone gas is added. Then, the gas mixture is irradiated with ultraviolet rays to form tritium water. The resulting tritium water is adsorbed onto a desiccant of the absorption system. Thus, tritium is removed from the gaseous atmosphere.

The present invention will now be described only by way of example with reference to the accompanying drawings.

### BRIEF DESCRIPTION OF THE DRAWINGS

Fig. 1 is a block diagram of a tritium removal system according to the present invention;
Fig. 2 is a perspective view of a non-catalytic oxidation apparatus according to the present invention;
Fig. 3 is a graph showing the rate of decomposition of ozone under ultraviolet irradiation according to the present invention;
Fig. 4 is a graph showing the formation of tritium water under ultraviolet irradiation according to the present invention; and
Fig. 5 is a block diagram of a conventional tritium removal system.

### DETAILED DESCRIPTION OF PREFERRED EMBODIMENTS

An embodiment of the present invention will be described in detail with reference to the accompanying drawings.

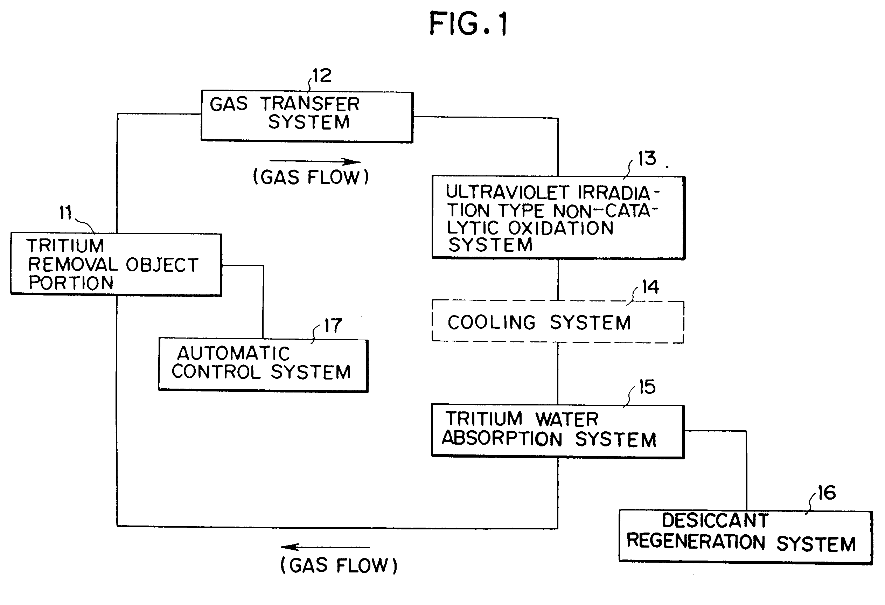

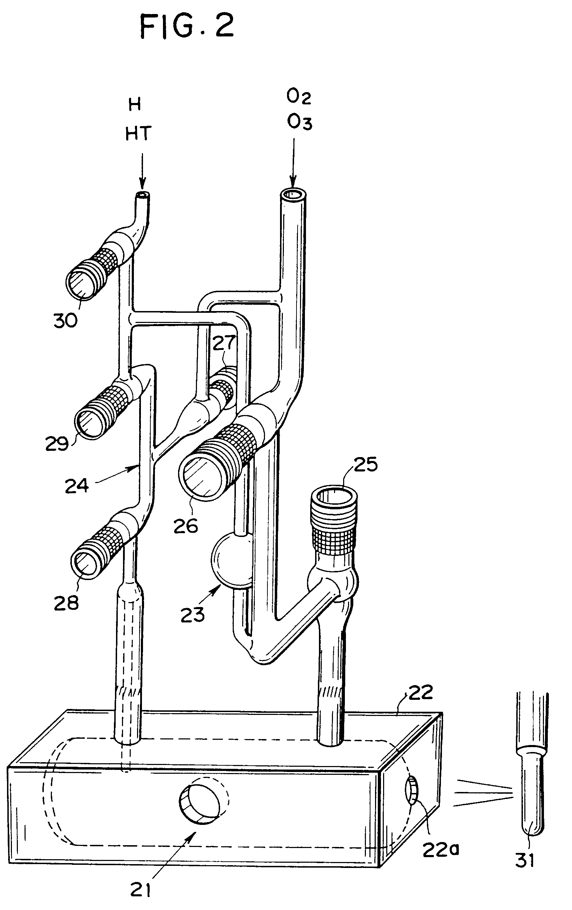

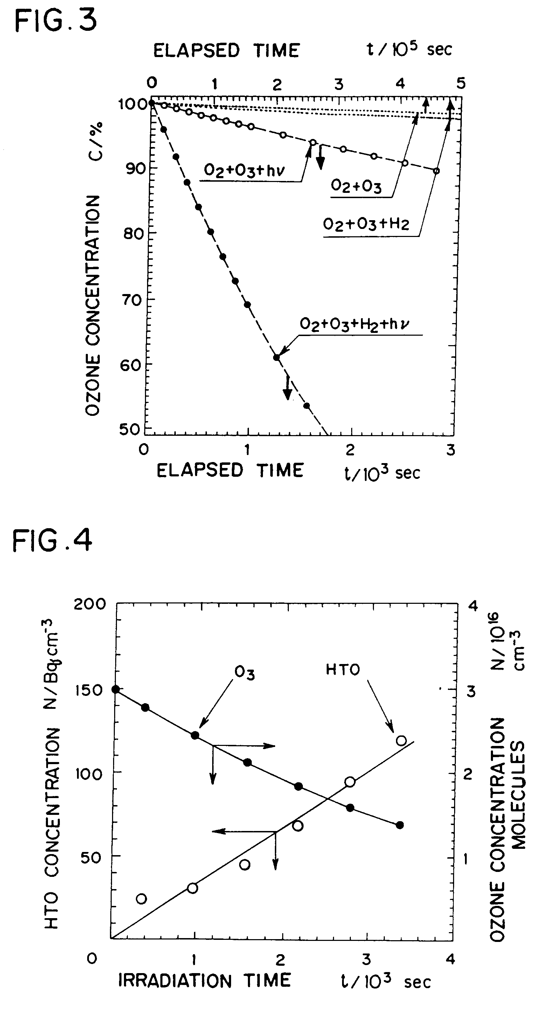

Fig. 1 is a block diagram of a system for removing tritium. Fig. 2 is a small, non-catalytic oxidation apparatus which irradiates a tritium-containing gas with ultraviolet rays. Fig. 3 shows the effect of ultraviolet irradiation to increase the rate of decomposition of ozone. Fig. 4 shows the effect of ultraviolet irradiation on the formation of tritium water.

A tritium removal system according to an embodiment of the present invention, as shown in Fig. 1, comprises a tritium removal object portion 11 equipped with a gas inlet for sucking a gaseous atmosphere; a gas transfer system 12 comprising a blower or the like for conveying the gas sucked from the tritium removal object portion 11; a non-catalytic oxidation system 13 for adding ozone to the gas conveyed thereto and irradiating the gas mixture with ultraviolet rays; a cooling system 14 having a heat exchanger for lowering the gas temperature becoming too high to a predetermined temperature, the system 14 being installed if desired; a tritium water absorption system 15 for adsorbing tritium water onto a desiccant; a desiccant regeneration system 16 for removing water from the desiccant used for the adsorption of tritium water to regenerate the tritium water adsorptivity of the desiccant; and an automatic control system 17 for managing the environmental conditions for these systems and the tritium removal objection portion 11.

In the non-catalytic oxidation system 13, the reactor to be charged with reactive gases is a silica glass container or a stainless steel container housed in a black box. The reactor has at a part of its side surface a shuttered opening of a certain size which permits irradiation of its inside with ultraviolet rays. The reactor also has pipings and shut-off valves (automatic or manual) for use in mixing reactive gases or in the analysis of the product. In the case of the glass reactor, the glass portion, except the inlet for ultraviolet rays, is coated with a black paint for preventing admission of light from the outside. A mercury vapor lamp is used for ultraviolet irradiation.

A small-scale non-catalytic oxidation apparatus as shown in Fig. 2 has been produced for experimental purposes. The experiments are intended to strictly make sure that when a tritium-containing gas incorporating ozone is irradiated with ultraviolet rays, tritium is oxidized without using a catalyst, and tritium water is produced during the process of the reaction.

This apparatus has a silica glass reactor 21 (capacity: 319 cm³) to be charged with reactive gases, and a black box 22 housing the reactor 21. Partially at a side surface of the black box 22 is provided a shuttered opening 22a of a certain size capable of ultraviolet irradiation therethrough. Pipings 23, 24 are joined to the reactor 21 for use in mixing reactive gases or in analyzing the product. The piping 23 is an ozone feed piping, which has a shut-off valve 25, comprising a greaseless Teflon cock. The piping 24 is a tritium gas feed piping, which has a shut-off valve 28, comprising a greaseless Teflon cock. The glass portions of these members are coated with a black paint for preventing the admission of light from the outside. A 5W low pressure mercury vapor lamp 31 is used for ultraviolet irradiation.

In the absence of tritium, the effect of ultraviolet irradiation on the rate of decomposition of ozone was investigated using this apparatus.

The reactor 21 was connected to an ordinary vacuum device, and with the outermost shut-off valves 26, 27, 30 being closed, was thoroughly evacuated at room temperature. After a predetermined vacuum level was reached, the shut-off valves 25, 28, 29 were closed. Then, the shut-off valves 25, 27 and 29 were opened to charge oxygen containing 1.5% ozone by 760 Torr (1 atmosphere) into the reactor 21 via the piping 23. Then, the shut-off valves 25, 27 were closed, and the shut-off valves 28, 30 were opened to incorporate 0 to 3% of hydrogen. The shut-off valves 28, 30 were closed to seal a hydrogen-oxygen gas mixture at a predetermined mixing ratio in the reactor 21. Thereafter, the low pressure mercury vapor lamp 31 was lit to emit ultraviolet rays. Upon ultraviolet irradiation, changes in the ozone concentration as indicators of the rate of ozone decomposition in the reactor were directly measured by means of an ultraviolet spectrophotometer (not shown).

The results of the ultraviolet irradiation of the reactant gas without tritium are shown in Fig. 3, where the elapsed time is on the abscissas, and the ozone concentration on the ordinates. As shown in the drawing, when no ultraviolet irradiation was performed, the rate of ozone decomposition in a hydrogen-free oxygen atmosphere was 3.38x10⁻⁵%/sec, and the rate of ozone decomposition in an oxygen atmosphere containing 3% hydrogen was 4.35x10⁻⁵%/sec. Under ultraviolet irradiation, on the other hand, the rate of ozone decomposition in a hydrogen-free oxygen atmosphere was 3.73x10⁻³%/sec, and the rate of ozone decomposition in an oxygen atmosphere containing 3% hydrogen was 3.35x10⁻²%/sec, thus showing an approximately 10-fold promotion. That is, the rate of ozone decomposition in an oxygen atmosphere was promoted about 110 times by ultraviolet irradiation, and that in the atmosphere incorporating hydrogen was further promoted to about 770 times the original value. These results were highly consistent with the results of computer simulations showing that the rate of ozone decomposition under ultraviolet irradiation was dependent on the 1/2 order of the hydrogen partial pressure.

Subsequently, the effect of ultraviolet irradiation on the formation of tritium water was investigated in an oxygen atmosphere incorporating tritium.

The reactor 21 was thoroughly evacuated at room temperature. After a predetermined degree of vacuum was reached, about 2 Torr of a hydrogen gas was introduced into the reactor 21. Then, a tritium gas diluted to about 1:100 with hydrogen was charged by 0.01 Torr into the piping 24, whereafter an oxygen gas containing a predetermined amount of ozone was introduced by 760 Torr (1 atmosphere) into the piping 23. Mixing of these gases was adjusted by suitably opening and closing the shut-off valves 25 to 30, as in the case of the ozone decomposition tests. Then, ultraviolet irradiation was performed. The irradiation time was 10 minutes for each irradiation. After each irradiation step, gases in the reactor were partly taken into the piping 24 that had been evacuated. The samples collected were subjected to analysis for the measurement of the amount of tritium water produced. Measurements of the amounts were made using a liquid scintillation counter. Changes in the ozone concentration during irradiation were monitored with an ultraviolet spectrophotometer.

The results on the effect of ultraviolet irradiation in such an oxygen atmosphere incorporating tritium are shown in Fig. 3, where the irradiation time is on the abscissas, and the tritium water concentration or the ozone concentration on the ordinates. As shown in the drawing, the concentration of tritium water increased almost linearly with the irradiation time, whereas the concentration of ozone decreased almost linearly with the irradiation time. The rate of production of tritium water was found to be 3.4x 10⁻² Bq/cm³·s (1.9x10⁷ molecules/cm³·s). Under these testing conditions, the hydrogen/tritium ratio is 12,000. Thus, if the formation of water by oxidation of hydrogen is assumed to proceed likewise, the rate of formation of water may be 2.3x10¹¹ molecules/cm³·s. This value corresponds to about 14,000 times the rate of formation attained under ultraviolet irradiation without the addition of ozone. This finding demonstrates that the addition of ozone is very effective in oxidizing tritium gas.

As noted above, it has been confirmed that the non-catalytic oxidation method according to the instant embodiment makes the oxidation of tritium possible.

Accordingly, the invented tritium removal apparatus having a tritium oxidation system adopting such a non-catalytic oxidation method markedly alleviates the problems with the prior art, exhibiting the following effects:
(a) The oxidation reaction can be started instantaneously (against problem (1)).
(b) No radioactive wastes occur (against problems (2), (3)).
(c) The system is simple in structure and can be scaled down (against problem (4)).
(d) The apparatus can be maintained very easily (against problem (5)).

These advantages result in the improvement of reliability and durability of the removal apparatus.

As described in the foregoing, the present invention exhibits the following effects:

According to the non-catalytic oxidation method for tritium of the first aspect of the present invention, when an ozone gas-incorporated gaseous atmosphere containing tritium is irradiated with ultraviolet rays, tritium water can be formed. The resulting tritium water is adsorbed onto a desiccant, whereby tritium can be removed from the gaseous atmosphere. Furthermore, this oxidation reaction can be started instantaneously, no radioactive wastes occur, the system is simple in structure and can be scaled down, and the apparatus can be maintained very easily. Thus, the tritium removal apparatus can enjoy improved reliability and durability.

According to the non-catalytic oxidation method for tritium of the second of the present invention, when a tritium-containing gaseous atmosphere incorporating an ozone gas-containing oxygen gas is irradiated with ultraviolet rays, the ozone gas incorporated is decomposed into oxygen molecules and active oxygen atoms. The active oxygen atoms react with tritium molecules, generating hydroxyl radicals. The hydroxyl radicals react with tritium molecules again, forming tritium water. The resulting tritium water is adsorbed onto a desiccant, thus making it possible to remove tritium from the gaseous atmosphere.

According to the non-catalytic oxidation method for tritium of the third aspect of the present invention, when a tritium-containing hydrogen gas incorporating an oxygen gas containing a predetermined amount of an ozone gas is irradiated with ultraviolet rays, the ozone gas incorporated is decomposed into oxygen molecules and active oxygen atoms. The active oxygen atoms react with tritium molecules, generating hydroxyl radicals. The hydroxyl radicals react with tritium molecules again, forming tritium water. Since the resulting tritium water is adsorbed onto a desiccant, tritium can be removed from the hydrogen gas, the gaseous atmosphere.

According to the apparatus for non-catalytic oxidation of tritium of the present invention, the ozone gas introduction shut-off valve provided in the ozone gas introduction line is opened to introduce an ozone gas into the reactor accommodating a gaseous atmosphere containing tritium. Then, ultraviolet rays are emitted by the ultraviolet irradiator to irradiate the ozone gas-incorporated gaseous atmosphere containing tritium with ultraviolet rays via the ultraviolet rays passing window provided in the reactor, whereby tritium water can be formed in the reactor. Thus, the apparatus can serve as a simpler, highly reliable and durable, scaled-down apparatus. When it is applied to a tritium removal system, it can improve the reliability and durability of the system.

According to the system for removing tritium of the present invention, a tritium-containing gaseous atmosphere sucked from the tritium removal object portion is conveyed to the ultraviolet irradiation type non-catalytic oxidation system, where an ozone gas is added. Then, the mixture is irradiated with ultraviolet rays to form tritium water. The resulting tritium water is adsorbed onto a desiccant of the absorption system. As a result, tritium is removed from the gaseous atmosphere. Thus, a smaller, highly reliable and durable system for tritium removal can be realized.

While the present invention has been described with reference to the specific embodiment, it should be understood that the invention is not limited thereto, and various changes and modifications are possible without departing from the scope of the invention described and claimed herein.

## Claims

1. A method of non-catalytic oxidation of tritium, which comprises adding an ozone gas to a gaseous atmosphere containing tritium, and irradiating the gas mixture with ultraviolet rays.

2. A method of non-catalytic oxidation of tritium, which comprises adding an oxygen gas containing a predetermined amount of an ozone gas to a gaseous atmosphere containing tritium, and irradiating the gas mixture with ultraviolet rays.

3. A method of non-catalytic oxidation of tritium, which comprises adding an oxygen gas containing a predetermined amount of an ozone gas to a hydrogen gas containing tritium, and irradiating the gas mixture with ultraviolet rays.

4. An apparatus for non-catalytic oxidation of tritium, comprising an ultraviolet irradiator for emitting ultraviolet rays; a reactor for accommodating a gas mixture containing ozone as well as tritium, the reactor having a window for passing ultraviolet rays emitted by the ultraviolet irradiator; an ozone gas introduction line for introducing an ozone gas into the reactor; and an ozone gas introduction shut-off valve.

5. A system for removing tritium, including an ultraviolet irradiation type non-catalytic oxidation system for irradiating an ozone gas-incorporated gaseous atmosphere containing tritium with ultraviolet rays.
